## Europäisches Patentamt
## European Patent Office
## Office européen des brevets

(19)

(11) Veröffentlichungsnummer: **0 023 248**
**B1**

(12) **EUROPÄISCHE PATENTSCHRIFT**

(45) Veröffentlichungstag der Patentschrift:
26.05.82

(21) Anmeldenummer: 80102993.5

(22) Anmeldetag: 29.05.80

(51) Int. Cl.³: **C 08 L 67/02** // (C08L67/02, 77/12)

(54) **Formmasse aus einem hochmolekularen linearen Polyester.**

(30) Priorität: 26.07.79 DE 2930343

(43) Veröffentlichungstag der Anmeldung:
04.02.81 Patentblatt 81/5

(45) Bekanntmachung des Hinweises auf die Patenterteilung:
26.05.82 Patentblatt 82/21

(84) Benannte Vertragsstaaten:
CH FR GB IT LI NL

(56) Entgegenhaltungen:
DE-A-2 712 987
DE-B-1 719 235
GB-A-1 276 214
US-A-3 544 658

(73) Patentinhaber: CHEMISCHE WERKE HÜLS AG,
Postfach 1320, D-4370 Marl 1 (DE)

(72) Erfinder: Horlbeck, Gernot, Dr., In der Thiebrei 80,
D-4358 Haltern (DE)
Erfinder: Mumcu, Salih, Dr., Bitterfelder Strasse 9a,
D-4370 Marl (DE)

Formmasse aus einem hochmolekularen linearen Polyester

Formmassen aus hochmolekularen linearen Polyestern sind in verstärkter und unverstärkter Form wertvolle Werkstoffe zur Herstellung von Teilen mit sehr guten mechanischen Eigenschaften. Ein bedeutender Nachteil ist eine unbefriedigende Kerbschlagzähigkeit, so dass der Anwendungsbereich für dünnwandige Formteile bzw. solche Teile mit Ecken und Kanten eingeschränkt ist.

Zur Verbesserung der Kerbschlagzähigkeit beschreibt die DE-OS 26 51 560 Copolyester aus Terephthalsäure, Butandiol-(1,4) und einer verzweigten gesättigten aliphatische Dicarbonsäure mit 7 bis 30 Kohlenstoffatomen im Molekül. Diese Copolyester zeigen gegenüber Poly(butylenterephthalat) einen stark verringerten Schmelzpunkt.

Den gleichen Nachteil eines erniedrigten Schmelzpunktes zeigen Gemische aus Poly(butylenterephthalat) und Terephthalsäure/Sebazinsäure/Butandiol-(1.4)-Copolyestern (DE-OS 27 07 852).

Aus DE-OS 23 31 826 ist es bekannt, aliphatische Polylactone mit Poly(butylenterephthalat) zu vermischen. Da die Polylactone einen Schmelzbereich in der Grössenordnung von ca. 60°C besitzen, ergeben sich Formmassen, deren Anwendungsmöglichkeiten, insbesondere bei erhöhter Temperatur und bei einem Gebrauch über einen längeren Zeitraum eingeschränkt sind.

Zur Verbesserung der Schlagzähigkeit von linearen Polyestern beschreibt DE-OS 26 22 414 die Zugabe von bis zu 20 Gewichtsprozent aromatischem Polycarbonat, wobei eine der Komponenten in Pulverform vorliegen muss. Ähnliche Massnahmen sind aus DE-OS 23 48 377 bekannt. Gemäss DE-OS 23 48 377 ist es jedoch schwierig, derartige die Schlagzähigkeit verbessernde Komponenten in dem Polyester so zu dispergieren, dass homogene Formteile erhalten werden können.

Ferner werden Poly(alkylenglykole) mit einem mittleren Molekulargewicht von 600 bis 6000 als Cokomponente in beispielsweise Poly(butylenterephthalat) beschrieben (DE-OS 27 25 709). Diese Massnahme erbringt keine Veränderung bzw. Verbesserung der Kerbschlagzähigkeit.

Durch Abmischen von linearen Polyestern mit elastomeren segmentierten Copolyestern aus Terephthalsäure(dialkylester), Alkandiol und Poly(alkylenglykol) kann die Kerbschlagzähigkeit von Formmassen verbessert werden. Gleichzeitig verschlechtern sich andere mechanische Eigenschaften wie beispielsweise die Steifigkeit von daraus hergestellten Formteilen beträchtlich (DE-OS 23 63 512).

Die Verwendung von Polyetheresteramiden zur Herstellung von Formkörpern mit hoher Kälteschlagzähigkeit ist aus DE-OS 27 12 987 bekannt. Diese Druckschrift beschreibt aber nicht die Verwendung derartiger Produkte als Cokomponente in linearen Polyestern. Weiterhin ist der Druckschrift nicht zu entnehmen, dass bei einer möglichen Abmischung die daraus hergestellten Formmassen ebenfalls eine verbesserte Kerbschlagzähigkeit besitzen.

Aufgabe der vorliegenden Erfindung war es, hochmolekulare lineare Polyester für Formmassen zu entwickeln, die eine erhöhte Kerbschlagzähigkeit besitzen, welche aber nicht die bereits oben aufgeführten Nachteile besitzen.

Diese Aufgabe wird erfindungsgemäss durch Formmassen aus einem hochmolekularen linearen Polyester und einem Polyetheresteramid gelöst, wobei die Formmassen

A. zu 60 bis 97 Gewichtsprozent, bezogen auf die Gesamtmasse, aus einem Poly(alkylentere phthalat) und

B. zu 3 bis 40 Gewichtsprozent, bezogen auf die Gesamtmasse, aus einem Polyetheresteramid besteht, in denen die Komponente A. durch Kondensieren von

    1. 80 bis 100 Molprozent Terephthalsäure

    2. 0 bis 20 Molprozent einer weiteren aromatischen cycloaliphatischen oder aliphatischen Dicarbonsäure

    3. 80 bis 100 Molprozent eines Alkandiols-(1.n), wobei n den Wert 2 bis 4 annehmen kann

    4. 0 bis 20 Molprozent eines weiteren aliphatischen oder cycloaliphatischen Diols erhalten worden ist und in denen die Komponente B. durch Kondensieren von

    1. einer oder mehrerer polyamidbildender Verbindungen aus der Gruppe der ω-Aminocarbonsäuren bzw. Lactame mit mindestens 10 Kohlenstoffatomen

    2. einem Poly(alkylenglykol) mit einem Molekulargewicht im Bereich von 400 bis 6000

    3. einer oder mehrerer weiterer aliphatischer cycloaliphatischer oder aromatischer Dicarbonsäuren

erhalten worden ist und wobei das Gewichtsverhältnis der Komponente B.1. zu (B.2. + B.3.) zwischen 20:80 und 90:2 liegt und die Hydroxyl- und Carboxylgruppen in (B.2. + B.3.) in etwa äquivalenten Mengen vorliegen.

Als Poly(alkylenterephthalate) der Komponente A. kommen Poly(ethylenterephthalat), Poly(propylenterephthalat) und vorzugsweise Poly(butylenterephthalat) in Frage. Bis zu 20 Molprozent der Terephthalsäure kann durch Reste anderer aromatischer, cycloaliphatischer oder aliphatischer Dicarbonsäuren, wie z.B. Isophthalsäure, Phthalsäure, 1,4-Cyclohexandicarbonsäure, Adipinsäure, Sebazinsäure, Decandicarbonsäure-(1,10) ersetzt sein. Neben den bereits genannten Diolen können bis zu 20 Molprozent, vorzugsweise 5 bis 15 Molprozent, der Dioleinheiten durch Reste anderer Diole wie z.B. 1,4- oder 1,3-Dimethylolcyclohexan, Neopenthylglykol, Hexandiol-1,6, Pentandiol-1,5, Dodecandiol-1,12, Propandiol-1,2 verwendet werden.

Die Poly(alkylenterephthalate) werden nach bekannten Verfahren durch Um- oder Veresterung und Polykondensation von Terephthalsäure selbst und/oder deren polyesterbildenden Derivaten und Diol in Gegenwart von Katalysatoren hergestellt. (Sorensen und Campbell, „Preparative Methods of Polymer Chemistry", Interscience Publishers Inc., N. Y. 1961, S. 111 bis 127; Kunststoff-Handbuch, Band VIII, C. Hanser Verlag-München). Die für die Erfindung eingesetzten Poly(alkylenterephthalate) besitzen eine Viskositätszahl > 75 cm³/g.

Als polyamidbildende Verbindungen (B.1) werden ω-Aminocarbonsäuren bzw. Lactame mit mindestens 10 Kohlenstoffatomen, vorzugsweise Laurinlactam, ω-Aminododecansäure oder ω-Aminoundecansäure, verwendet. Eine weitere bevorzugte Möglichkeit besteht darin, anstelle der monomolekularen Aminocarbonsäuren, deren Polymere mit einem mittleren Molekulargewicht von 500 bis 20000, vorzugsweise von 4000 bis 10000, einzusetzen.

Poly(alkylenglykole) der Komponente B.2 sind Poly(ethylenglykol), Poly(propylenglykol) oder Poly(tetrahydrofuran)diol mit jeweils einem mittleren Molekulargewicht im Bereich von 400 bis 6000, vorzugsweise 500 bis 2500. Bevorzugt ist die Verwendung von Poly(tetrahydrofuran)diol mit einem mittleren Molekulargewicht ($\overline{M}$n) im Bereich von 500 bis 2500.

Die angegebenen Werte für die mittleren Molekulargewichte ergeben sich aus den bestimmten Viskositätszahlen.

Die Komponente B.3 wird durch aliphatische, cycloaliphatische oder aromatische Dicarbonsäuren mit 4 bis 11 C-Atomen im Kohlenstoffgerüst gebildet. Beispielsweise seien Adipinsäure, Pimelinsäure, Korksäure, Azelaninsäure, Sebazinsäure, Dodecandisäure, Hexahydroterephthalsäure oder die Phthalsäuren genannt. Bevorzugt für diese Komponente werden Sebazinsäure und Dodecandisäure eingesetzt.

Die Polyetheresteramide sind in der Weise aufgebaut, dass sich das Gewichtsverhältnis der Komponente B.1 und (B.2 + B.3) im Bereich von 20:80 bis zu 98:2 bewegt. Bevorzugt ist ein Gewichtsverhältnis im Bereich von 30 bis 75:70 bis 25. Die Hydroxyl- und Carboxylgruppen von (B.2 + B.3) liegen in etwa äquivalenten Anteilen, d.h. in einem Verhältnis von 1:0,95 bis 1:1,05, vor.

Bevorzugte Polyetheresteramide werden durch Umsetzung von Laurinlactam, Poly(tetrahydrofuran)diol mit einem mittleren Molgewicht von 650 bis 2000 und Dodecandisäure hergestellt. Das mittlere Molekulargewicht dieser Produkte liegt im Bereich von 5000 bis 20000, vorzugsweise 8000 bis 15000.

Die Herstellung derartiger Polyetheresteramide ist beispielsweise in DE-OS 2712987 beschrieben.

Um die erfindungsgemässen Formmassen herzustellen, werden die Komponenten A. und B. miteinander vermischt. Hierzu werden z.B. Granulate der beiden Produkte bei ca. 265°C in einem Doppelschneckenkneter umgeschmolzen, homogenisiert, strangförmig in einem Wasserbad ausgetragen und anschliessend granuliert.

Eine weitere Möglichkeit, die erfindungsgemässen Formmassen zu erhalten besteht darin, während der Polyesterherstellung das Polyetheresteramid oder dessen Einzelkomponenten der Reaktionsmischung zuzufügen. Der Zugabezeitpunkt muss vor Beginn der Polykondensationsreaktion liegen. Ein bevorzugter Zeitpunkt liegt nach Beendigung der Um- bzw. Veresterungsstufe.

Während der Zugabe soll die Temperatur der Reaktionsmischung 170 bis 230°C, vorzugsweise 190 bis 210°C, betragen. Die Temperatur wird während einer Zeit von ca. 1 bis 4 h, vorzugsweise 2 bis 3 h, aufrechterhalten. Im Anschluss daran erfolgt die Polykondensationsstufe. Nach der Polykondensationsstufe können die erhaltenen Polyester in bekannter Weise einer Nachkondensation in fester Phase unterworfen werden.

Die erfindungsgemässen Formmassen bestehen zu 60 bis 97 Gewichtsprozent, vorzugsweise zu 92 bis 70 Gewichtsprozent, aus der Komponente A. und zu 3 bis 40 Gewichtsprozent, vorzugsweise zu 8 bis 30 Gewichtsprozent, aus der Komponente B.

Zusatz- und Hilfsstoffe wie Pigmente, Mattierungsmittel, Verarbeitungshilfsmittel, Füllstoffe, Thermo- bzw. UV-Stabilisatoren können sowohl während der Herstellung als auch in die fertigen Formmassen selbst eingearbeitet werden.

Als Thermostabilisatoren können Phenole oder Phenolderivate, vorzugsweise sterisch gehinderte Phenole mit Alkylsubstituenten in beiden o-Stellungen zur phenolischen Hydroxygruppe sowie Amine, vorzugsweise sekundäre Arylamine, eingesetzt werden. Diese Stabilisatoren werden in Mengen von 0,1 bis 2 Gewichtsprozent bezogen auf die fertige Formmasse verwendet. Bevorzugte Verbindungen sind 4,4'-bis(2,6-di-tert.-Butylphenol), 2,2'-Methylen-bis(4-methyl-6-tert.-butylphenol) oder 4,4'-bis(α,α-dimethyl-benzyl)-diphenylamin.

Als UV-Stabilisatoren sind substituierte Benzophenone oder Benztriazole geeignet.

Aus den erfindungsgemässen Formmassen lassen sich nach den üblichen Formgebungsverfahren (Spritzguss, Extrusion) Formkörper wie z.B. technische Apparateteile, Leitungsummantelungen, Profile, Elektroisolierungen herstellen.

Die Erfindung wird nachstehend anhand der Beispiele erläutert.

Die Viskositätszahlen des Poly(alkylentereph thalats) sowie des mit dem Polyetheresteramid modifizierten Poly(alkylenterephthalats) wurde an Lösungen von 0,23 g Produkt bei 25°C in 100 ml Phenol/1,1,2,2-Tetrachlorethan (Gewichtsverhältnis 60:40) bestimmt.

Die Viskositätszahlen der Polyetheresteramide wurden an Lösungen von 0,5 g Produkt bei 25°C in 100 ml m-Kresol bestimmt (DIN 53727).

Die Schmelzbereiche wurden nach der Differential-Thermokalorimetrie (DSC)-Methode bestimmt.

Die Torsionsschwingungsmessungen wurden an Pressplatten durchgeführt, die bei 240°C und einem Druck von 44 bar hergestellt worden waren. Die Messfrequenz betrug 1 Hz. Nach dieser Methode wurden der Torsionsmodul in Abhängigkeit von der Temperatur sowie die Glastemperatur ermittelt. Zur Bestimmung der Kerbschlagzähigkeit (DIN 53453), der Grenzbiegespannung (DIN

53452) und des E-Moduls (DIN 53457, Abschnitt 2.3) wurden mit Hilfe einer Schneckenkolbenspritzgiessmaschine bei einer Zylindertemperatur von 230 bis 250°C und einer Formtemperatur von 60°C Normkleinstäbe und Zugstäbe hergestellt.

*Beispiele:*

*Versuch A* (nicht erfindungsgemäss)

9,7 kg Dimethylterephthalat, 9,0 kg Butandiol-(1,4) und 36 g 10%ige Titantetraisopropylat-Lösung in Isopropanol werden gemäss den für die Versuche 5 bis 7 angegebenen Bedingungen umgesetzt.

*Versuche 1-4*

9,7 kg Dimethylterephthalat, 9,0 kg Butandiol-(1,4) und 36 g 10%ige Titantetraisopropylat-Lösung in Isopropanol werden in einem Polykondensationskessel aufgeschmolzen und bei 180 bis 200°C im Stickstoffstrom umgeestert, bis die berechnete Menge Methanol aus dem Reaktionsgemisch abdestilliert ist. Dann wird die in Tabelle 1 in Gewichtsprozent angegebene Menge Polyetheresteramid bei 200°C zugegeben und zwei Stunden eingerührt. Bei dieser Temperatur wird anschliessend innerhalb von 1,5 Stunden Wasserstrahlvakuum angelegt und dann das Reaktionsgemisch unter Abdestillieren des überschüssigen Butandiols-(1,4) auf 250°C aufgeheizt. Der Druck wird auf weniger als 0,5 mbar vermindert; unter diesen Bedingungen wird der Ansatz in einer Stunde polykondensiert.

Nach Aufheben des Vakuums mit Stickstoff wird der Ansatz über eine Spinnpumpe aus dem Reaktionskessel ausgetragen, in Wasser abgekühlt und granuliert.

Zur Durchführung der Versuche wird ein Polyetheresteramid eingesetzt, das gemäss DE-OS 2712987 erhalten wurde. Es wurde durch Polykondensation von Laurinlactam (B.1), Dodecandisäure und Poly(tetrahydrofuran)diol mit einem mittleren Molekulargewicht von 1000 (B.2 + B.3) erhalten, wobei das Gewichtsverhältnis B.1:(B.2 + B.3) = 75:25 betrug. Die Viskositätszahl des Polykondensats lag bei 1,34 cm³/g, sein Schmelzpunkt betrug 170°C.

Tabelle 1

| Versuch | zugesetzte Menge Polyetheresteramid (Gew.-Tle)/100 Tle Polybutylenterephthalat | Viskositätszahl [cm³/g] | Fp [°C] | Kerbschlagzähigkeit (DIN 53453, 23°C) [mJ/mm²] | Tg [°C] | Schubmodul G' (+20°C) [N/mm²] |
|---|---|---|---|---|---|---|
| 1 | 8,3 | 86 | 228 | 3,5 | 42 | $9 \times 10^2$ |
| 2 | 15,4 | 76 | 226 | 5,2 | 34 | $7,3 \times 10^2$ |
| 3 | 21,4 | 88 | 224 | 6,0 | 23 | $6,6 \times 10^2$ |
| 4 | 26,7 | 84 | 215 | 8,4 | 15 | $5,3 \times 10^2$ |
| A | — | 90 | 228 | 2,7 | 47 | $1 \times 10^3$ |

*Versuche 5-7*

9,7 kg Dimethylterephthalat, 9,0 kg Butandiol-(1,4) und 36 g 10%iger Titantetraisopropylat-Lösung in Isopropanol werden aufgeschmolzen, bis die berechnete Menge Methanol aus dem Reaktionsgemisch abdestilliert ist. Dann werden die in Tabelle 2 in Gewichtsprozenten angegebenen Mengen Polyamid 12, Dodecandisäure und Poly(tetrahydrofuran)diol ($\overline{M}n$ = 1000) zugegeben und 2 h bei 200°C eingerührt.

Anschliessend wird innerhalb von 30 Minuten Wasserstrahlvakuum angelegt und dann in zwei Stunden das Reaktionsgemisch auf 250°C aufgeheizt. Nachdem der Druck auf weniger als 0,5 mbar reduziert ist, wird der Ansatz unter diesen Bedingungen in 1,5 h polykondensiert.

Das Vakuum wird mit Stickstoff aufgehoben und der Ansatz in üblicher Weise ausgefahren.

*Versuche 8-10*

Granuliertes Polyetheresteramid wird im angegebenen Verhältnis mit granuliertem Polybutylenterephthalat gemischt und bei 260 bis 270°C in einem Doppelschneckenkneter umgeschmolzen, homogenisiert, strangförmig in ein Wasserbad ausgetragen und granuliert.

Das Polyetheresteramid wurde gemäss DE-OS 2712987 hergestellt. Es wurde durch Polykondensation von Laurinlactam (B.1), Dodecandisäure und Poly(tetrahydrofuran)diol mit einem mittleren Molekulargewicht von 1000 (B.2 + B.3) erhalten, wobei das Gewichtsverhältnis B.1: (B.2 + B.3) = 1:1 betrug. Die Viskositätszahl des Polykondensats lag bei 1,89 cm³/g, der Schmelzbereich lag bei 149 bis 155°C.

Als Polyester wurde ein handelsübliches Produkt (VESTODUR® B - Viskositätszahl: 110 cm³/g) verwendet.

Tabelle 2

| Versuch | zugesetzte Menge (Gew.-Tle)/100 Tle Polybutylenterephthalat | Viskositätszahl [cm³/g] | Fp [°C] | Kerbschlagzähigkeit (DIN 53453, 23°C) [mJ/mm²] | Tg [°C] | Schubmodul G' (+20°C) [N/mm²] |
|---|---|---|---|---|---|---|
| 5 | 6,65 PA 12* <br> 1,25 DDS* <br> 5,4 PTHF* | 97 | 217 | 6,5 | 18 | $5,5 \times 10^2$ |
| 6 | 11,8 PA 12 <br> 2,2 DDS <br> 9,6 PTHF | 103 | 210 | 22 | 8 | $4,1 \times 10^2$ |
| 7 | 5,9 PA 12 <br> 3,3 DDS <br> 14,4 PTHF | 112 | 211 | KB | 0 | $3,5 \times 10^2$ |
| A | — | 90 | 228 | 2,7 | 47 | $1 \times 10^3$ |

\* PA 12: Polyamid 12 (mittleres Molekulargewicht 10 000)
  DDS: Dodecandisäure
  PTHF: Poly(tetrahydrofuran)diol (mittleres Molekulargewicht 1 000)

Tabelle 3

| Versuch | zugesetzte Menge Polyetheresteramid (Gew.-Tle)/100 Tle Polybutylenterephthalat | E-Modul (Zug) (DIN 53457) [N/mm²] | Kerbschlagzähigkeit (DIN 53453, 23°C) [mJ/mm²] | Grenzbiegespannung (DIN 53452) [N/mm²] |
|---|---|---|---|---|
| 8 | 11,1 | 2300 | 6,4 | 83 |
| 9 | 17,6 | 2300 | 6,9 | 73 |
| 10 | 25,0 | 2200 | 12,2 | 70 |
| A | — | 2200 | 2,7 | 96 |

**Patentansprüche**

1. Formmasse aus einem hochmolekularen linearen Polyester und einem Polyetheresteramid, dadurch gekennzeichnet, dass die Formmasse

A. zu 60 bis 97 Gewichtsprozent, bezogen auf die Gesamtmasse, aus einem Poly(alkylenterephthalat) und

B. zu 3 bis 40 Gewichtsprozent, bezogen auf die Gesamtmasse, aus einem Polyetheresteramid

besteht, in der die Komponente A. durch Kondensieren von

1. 80 bis 100 Molprozent Terephthalsäure

2. 0 bis 20 Molprozent einer weiteren aromatischen cycloaliphatischen oder aliphatischen Dicarbonsäure

3. 80 bis 100 Molprozent eines Alkandiols-(1.n), wobei n den Wert 2 bis 4 annehmen kann

4. 0 bis 20 Molprozent eines weiteren aliphatischen oder cycloaliphatischen Diols erhalten worden ist und in der die Komponente B. durch Kondensieren von

1. einer oder mehrerer polyamidbildender Verbindungen aus der Gruppe der ω-Aminocarbonsäuren bzw. Lactame mit mindestens 10 Kohlenstoffatomen

2. einem Poly(alkylenglykol) mit einem Molekulargewicht im Bereich von 400 bis 6000

3. einer oder mehrerer weiterer aliphatischer cycloaliphatischer oder aromatischer Dicarbonsäuren

erhalten worden ist und wobei das Gewichtsverhältnis der Komponente B.1. zu (B.2. + B.3.) zwischen 20:80 und 98:2 liegt und die Hydroxyl- und Carboxylgruppen in (B.2. + B.3.) in etwa äquivalenten Mengen vorliegen.

2. Formmasse nach Anspruch 1, dadurch gekennzeichnet, dass sie zu 92 bis 70 Gewichtsprozent aus der Komponente A und zu 8 bis 30 Gewichtsprozent aus der Komponente B besteht.

## Claims

1. A moulding composition from a high molecular weight linear polyester and a polyetheresteramide, characterised in that the composition consists of

A) 60 to 97 per cent by weight, based on the total composition, of a polyalkylene terephthalate and

B) 3 to 40 per cent by weight, based on the total composition, of a polyetheresteramide,

component A) having been obtained by condensation of

1) 80 to 100 mol percent of terephthalic acid,

2) 0 to 20 mol per cent of a further aromatic, cycloaliphatic or aliphatic dicarboxylic acid,

3) 80 to 100 mol per cent of an alkane-1,n-diol, where n is from 2 to 4.

4) 0 to 20 mol per cent of a further aliphatic or cycloaliphatic diol,

and component B) having been obtained by condensation of

1) one or more polyamide-forming compounds selected from $\omega$-amino carboxylic acids and lactams of at least 10 carbon atoms,

2) a polyalkylene glycol with a molecular weight in the range from 400 to 6000,

3) one or more further aliphatic, cycloaliphatic or aromatic dicarboxylic acids,

the weight ratio of component B.1) to components B.2) plus B.3) being from 20:80 to 98:2, and the hydroxyl groups and carboxyl groups in B.2 and B.3 being present in approximately equivalent amounts.

2. A moulding composition according to claim 1, characterised in that it consists of 92 to 70 per cent by weight of component A) and 8 to 30 per cent by weight of component B).

## Revendications

1. Matière à mouler formée d'un polyester à poids moléculaire élevé et d'un polyéther-esteramide, ladite matière à mouler étant caractérisée par le fait qu'elle comprend:

A. de 60 à 97% en poids, relativement au total de la matière, d'un poly-(téréphtalate d'alkylène) et

B. de 3 à 40% en poids, relativement au total de la matière, d'un polyéther-esteramide,

le constituant A ayant été obtenu par condensation

1) de 80 à 100 mol% d'acide téréphtalique,

2) de 0 à 20 mol% d'un autre acide dicarboxylique aromatique, cyclo-aliphatique ou aliphatique,

3) de 80 à 100 mol% d'un alcane-diol-(1,n), n pouvant prendre une valeur de 2 à 4,

4) de 0 à 20 mol% d'un autre diol aliphatique ou cyclo-aliphatique,

et le constituant B ayant été obtenu par condensation

1) d'un ou plusieurs composés formateurs de polyamide, pris dans le groupe des acides $\omega$-amino-carboxyliques ou lactames contenant au moins 10 atomes de carbone,

2) d'un poly-(alkylène-glycol) ayant un poids moléculaire compris entre 400 et 6000,

3) d'un ou plusieurs autres acides dicarboxyliques aliphatiques, cyclo-aliphatiques ou aromatiques,

le rapport pondéral entre le constituant B.1 et les constituants (B.2 + B.3) étant compris entre 20:80 et 98:2 et les groupes hydroxyle et carboxyle de (B.2 + B.3) étant présents en quantités à peu près équivalentes.

2. Matière à mouler selon la revendication 1, caractérisée par le fait qu'elle est formée pour 92 à 70% en poids par le constituant A et pour 8 à 30% en poids par le constituant B.